# EUROPEAN PATENT APPLICATION

(11) **EP 3 895 539 A1**
(43) Date of publication of application: **20.10.2021**
(21) Application number: 19896729.1
(22) Date of filing: 29.11.2019
(51) Int. Cl.: A01N 57/20, A01N 43/80, A01N 25/22, A01P 13/00

(54) **SOLID PREPARATION FROM HERBICIDE COMPOSITION AND PREPARATION METHOD THEREFOR**

(30) Priority: 14.12.2018 CN 201811533155
(71) Applicant: Shenyang Sinochem Agrochemicals R & D Co., Ltd., Shenyang, Liaoning 110021 (CN)
(72) Inventor: CHOU, Jingyu, Shenyang, Liaoning 110021 (CN); LI, Yang, Shenyang, Liaoning 110021 (CN); CUI, Yong, Shenyang, Liaoning 110021 (CN); DONG, Guangxin, Shenyang, Liaoning 110021 (CN); MI, Shuang, Shenyang, Liaoning 110021 (CN); YANG, Jichun, Shenyang, Liaoning 110021 (CN); LIU, Changling, Shenyang, Liaoning 110021 (CN)
(74) Representative: Nederlandsch Octrooibureau
(86) International application number: PCT/CN2019/122000
(87) International publication number: WO 2020/119480

(57) **Abstract**

The present invention relates to a stable herbicidal composition. The composition comprises two active components of A and B; the component A is selected from a compound shown in the following formula I: 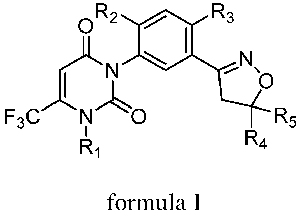 the component B is selected from glyphosate and an applicable salt or ester thereof. When a solid formulation is prepared, the active component A is firstly absorbed by an absorption carrier, and the absorbed product is then mixed with the component B, auxiliaries and fillers to obtain a stable solid formulation.

## Description

### Technical Field

The present invention belongs to the field of agricultural herbicides, and relates to a solid formulation of a herbicidal composition and a preparing method thereof.

### Background

Patent WO2016095768 has reported an isoxazoline-containing uracil compound shown in a formula I:

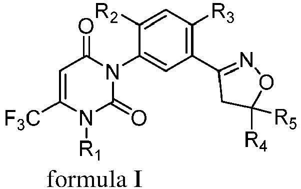

The compound in the formula I has good herbicidal activity, can effectively control weeds of different leaf stages, such as barnyard grass, green bristlegrass, cyperus difformis, juncellus serotinus, crab grass, hispid arthraxon, piemarker, zinnia, amaranthus retroflexus, purslane, xanthium, nightshade, cassia, hibiscus trionum and glycine ussuriensis, and can obtain good weeding effect at low dose.

Glyphosate, which is an English common name, has the CA registration number of 1071-83-6, chemical names of *N*-(phosphorylmethyl)glycine and *N*-(phosphorylmethyl) glycine, an English chemical name of 2-(phosphonomethylamino)acetic acid, a molecular formula of C₃H₈NO₅P and a molecular weight of 169.09. The glyphosate is absorbed by stems and leaves and transmitted to various parts of the plant, so as to prevent and remove more than 40 families of plants such as monocotyledon, dicotyledon, therophyte, perennation, herbs and shrubs. The glyphosate quickly combines with metal ions of iron, aluminum and the like and loses activity when entering soil, and has no adverse effect on hidden seeds and soil microorganisms in the soil. Because the glyphosate is non-selective, the glyphosate is widely used for controlling weeds in non-agricultural farms, orchards, roads, forestry, etc.

Patent CN108207997 has reported that synergy is obtained by mixing the formula I with glyphosate compounds, and also has listed the compositions of wettable powder, soluble granules or water dispersible granules of solid formulations. The compound of the formula I is mixed with a glyphosate product; and the corresponding solid formulation is prepared by a conventional method. The conventional method is: a preparing method of the wettable powder comprises: mixing and crushing active components, auxiliaries and fillers to obtain a product; the soluble granules are granular products obtained by granulating the mixture of the active components, the auxiliaries, aqueous fillers and adhesives (crushed) which are uniformly mixed; the water dispersible granules are granular products obtained by mixing and crushing the active components, the auxiliaries, the fillers and the adhesives and then granulating the crushed products. The formulation sample of the compound in formula I and glyphosate compound are prepared by conventional methods, when be preserved at 54 °C for 14 days, the decomposition rate of the compound of the formula I is high and fails to achieve the requirement that the decomposition rate is less than or equal to 5% in registration standards, thereby limiting the commercial development of the mixture.

### Summary

The purpose of the present invention is to provide a solid formulation of a herbicidal composition and a preparing method thereof.

To achieve the above purpose, the present invention adopts the following technical solution:
A preparing method of a solid formulation of a herbicidal composition comprises the following steps:
S1: an active component A is dissolved in solvent and emulsifier to obtain a mixture solution;
S2: the mixture solution is absorbed using an absorption carrier;
S3: the mixture of S2 is mixed with an active component B to prepare a solid formulation,
wherein the active component B is selected from glyphosate and an applicable salt or ester thereof, and the active component A is a compound shown in a structural formula such as formula I; 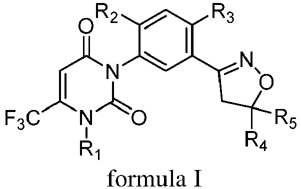 in the formula I:
R₁ is selected from hydrogen, amino or methyl;
R2 and R3 can be identical or different, and are respectively selected from hydrogen, fluorine or chlorine;
R₄ is selected from hydrogen, cyano, C₁-C₄ alkyl, C₁-C₄ haloalkyl, CO₂R₆, CH₂OR₇ or CONR₈R₉;
R₅ is selected from hydrogen, C₁-C₄ alkyl or C₁-C₄ haloalkyl;
R₆ is selected from hydrogen, C₁-C₄ alkyl, C₁-C₄ haloalkyl, C₃-C₄ alkenyl, C₃-C₄ alkynyl, C₁-C₄ alkoxy C₁-C₄ alkyl, C₁-C₄ alkylcarbonyloxy C₂-C₃ alkyl, 2-tetrahydrofuran methylene or 3-tetrahydrofuran methylene;
R₇ is selected from acetyl;
R₈ is selected from hydrogen or methyl;
R₉ is respectively selected from hydrogen, methyl, ethyl, isopropyl and tert-butyl.

The active component B is *N*-phosphonomethylglycine, organic salt of the *N*-phosphonomethylglycine, inorganic salt of the *N*-phosphonomethylglycine or ester of the *N*-phosphonomethylglycine. The organic salt of the *N*-phosphonomethylglycine is selected from ethanolamine salt, triisopropanolamine salt, triethylamine salt, isopropylamine salt or dimethylamine salt; the inorganic salt of the *N*-phosphonomethylglycine is selected from potassium salt, sodium salt or ammonium salt; the ester of the *N*-phosphonomethylglycine is methyl ester, ethyl ester, propyl ester, butyl ester, octyl ester or isooctyl ester.

Preferably, in the structural formula I of the compound shown in formula I in the active component A:
in the formula I:
R₁ is selected from amino or methyl;
R₁ is selected from amino or methyl;
R₂ is selected from hydrogen, fluorine or chlorine;
R₃ is selected from hydrogen, fluorine or chlorine;
R₄ is selected from CO₂R₆;
R₅ is selected from hydrogen or methyl;
R₆ is selected from hydrogen, methyl, ethyl, n-propyl, n-butyl, isopropyl, tert-butyl, methoxyethyl, ethoxyethyl, 2-tetrahydrofuran methylene or 3-tetrahydrofuran methylene.

In the step S2, the absorption carrier is selected from one or a mixture of more of carbon black, diatomite, pumice, attapulgite, kaolin or bentonite.

A mass ratio of the active component A to the absorption carrier is 1:70 to 10:1.

Preferably, the mass ratio of the active component A to the absorption carrier is 1:35 to 5:1.

Further preferably, a mass ratio of the active component A to the absorption carrier is 1:10 to 4:1.

In the step S1, at -20 °C to 150 °C, the active component A is dissolved in the mixture solution of the solvent and the emulsifier; and in the step S2, at -20 °C to 100 °C, the mixture solution is absorbed by the absorption carrier.

Preferably, in the step S1, at 10 °C to 90 °C, the active component A is dissolved in the mixture solution of the solvent and the emulsifier; and in the step S2, at 10 °C to 70 °C, the mixture solution is absorbed by the absorption carrier.

Further preferably, in the step S1, at 20 °C to 60 °C, the active component A is dissolved in the mixture solution of the solvent and the emulsifier; and in the step S2, at 20 °C to 60 °C, the mixture solution is absorbed by the absorption carrier.

The method of active component is adsorpted by absorption carries, which is widely used in the processing of pesticide formulations. The purpose is to facilitate the processing of the solid formulation with the liquid active ingredients are adsorbed by the carriers, but in the present invention, the active component A is adsorbed by the carriers, the degradation rate of the active component A is reduced significantly in the solid formulation which is mixed with the active component B.

In the step S1, the emulsifier is one or a mixture of more of an anionic emulsifier, a cationic emulsifier and a nonionic emulsifier; and the solvent is a protic solvent or an aprotic solvent.

The solvent is a protic solvent or an aprotic solvent.

The emulsifier is one or a mixture of more of an anionic emulsifier, a cationic emulsifier and a nonionic emulsifier; and the solvent is one or more of a protic solvent or an aprotic solvent.

The anionic emulsifier comprises the following alkali metal salt, alkaline earth metal salt and ammonium salt, especially sodium salt, potassium salt, calcium salt and ammonium salt, and specifically comprises alkyl sulfonate such as lauryl sulfonate and isotridecyl sulfonate; alkyl sulfate, especially fatty alcohol sulfate such as lauryl sulfate, isotridecyl sulfate and stearyl sulfate; ethoxylated alkanol sulfate such as ethoxylated lauryl sulfate; alkoxylated alkylphenol sulfate; alkyl phosphate and C₈-C₁₆ alkyl phosphate; dialkyl phosphate and C₈-C₁₆ dialkyl phosphate; dialkyl ester of sulfosuccinic acid, such as dioctyl sulfosuccinate; acyl sarcosinate; fatty acid such as stearate; acyl glutamate; alkoxylated alcohol or phosphate based on EO/PO block copolymer.

The nonionic surfactant specifically comprises ethoxylated alkanol, especially ethoxylated fatty alcohol and ethoxylated oxo alcohol, such as ethoxylated lauryl alcohol, ethoxylated isotridecanol, ethoxylated cetyl alcohol, ethoxylated stearyl alcohol and ester thereof such as acetate; ethoxylated alkylphenol such as ethoxylated nonylphenol, ethoxylated dodecylphenol, ethoxylated isotridealkylphenol and ester thereof such as acetate; alkyl glucoside such as alkyl polygucoside; ethoxylated alkyl glucoside; ethoxylated fatty amine; ethoxylated fatty acid; partial ester such as monoester, diester and triester of fatty acid and glycerol or sorbitan, such as glycerol monostearate, sorbitan monooleate and sorbitan tristearate; ethoxylated ester of fatty acid and glycerol or sorbitan, such as ethoxylated glyceryl monostearateethoxylate of vegetable oil or animal fat, such as corn oil ethoxylate, castor oil ethoxylate and tallow ethoxylate; ethoxylate of fatty amine, fatty acid amide or fatty acid diethanolamide; alkoxylated EO/PO polymer.

The cationic surfactant specifically comprises a quaternary ammonium salt compound, especially alkyltrimethyl ammonium salt and dialkyldimethyl ammonium salt such as halide, sulfate and alkyl sulfate; pyridinium salt, especially alkylpyridinium salt such as halide, sulfate and C₁-C₄ alkyl sulfate; and imidazolinium salt, especially *N*,*N*'-dialkyl imidazolinium salt, such as halide, sulfate and methyl sulfate.

In the implementation process, the emulsifier may be one emulsifier or a mixture of two or more emulsifiers.

The solvent comprises a protic solvent such as alcohol and polyhydric alcohol, and an aprotic solvent such as ether, ketone, lactone, carbonate, amide, lactam, benzene, naphthalene and alkane.

The alcohol is, for example, C₁-C₈ alkanol such as methanol, ethanol, n-propanol, isopropanol, n-butanol, isobutanol, 2-butanol, tert-butanol, pentanol, isoamylol, n-hexanol, 1-methylpentanol, 1-ethylbutanol, n-octanol and 2-ethylhexanol; C₅-C₈ cycloalkanol such as cyclopentanol and cyclohexanol; polyol such as sorbitol; alkylene glycol monomethyl ether, such as ethylene glycol monomethyl ether and propylene glycol monomethyl ether; di- and tri-C₂-C₄ alkylene glycol monomethyl ether such as diethylene glycol monomethyl ether and dipropylene glycol monomethyl ether.

The polyol is, for example, glycerol.

The ether is, for example, tetrahydrofuran, pyran and tetrahydrofurfural; alkylene glycol dimethyl ether, such as ethylene glycol dimethyl ether and propylene glycol dimethyl ether; di- and tri-C2-C4 alkylene glycol dimethyl ether, such as diglyme and dipropylene glycol dimethyl ether;

The ketone is, for example, ketone having 3 to 8 carbon atoms and optional hydroxyl, such as acetone, methyl ethyl ketone, methyl propyl ketone, methyl-4-hydroxybutyl ketone, cyclopentanone, cyclohexanone, diacetone alcohol and methyl isobutenyl ketone.

The lactone is, for example, lactone having 3-8 carbon atoms, such as β-propiolactone and γ-butyrolactone.

The carbonates are especially dimethyl carbonate, diethyl carbonate and 2-oxa-1,3-dioxane.

The linear amide is, for example, *N*,*N*-dimethylformamide, *N*,*N*-dimethylacetamide, *N*,*N*-dimethylpropionamide and *N*,*N*-dimethyl decylamide.

The lactam is preferably lactam having 3 to 6 carbon atoms, and *N*-methyl and *N*-ethyl derivatives thereof, such as pyrrolidin-2-ketone, *N*-methylpyrrolidin-2-ketone and *N*-ethylpyrrolidin-2-ketone.

The benzene solvent is, for example, benzene, toluene, xylene, trimethylbenzene and tetramethylbenzene.

The naphthalene solvent is, for example, naphthalene and methylnaphthalene.

The alkane solvent is, for example, n-hexane, cyclohexane, trichloromethane and 1,2-dichloroethane.

In the implementation process of the present invention, the solvent may be one solvent or a mixture of two or more solvents.

In the step S1, the mass ratio of the active component A to the emulsifier is 1:50 to 50:0; and the mass ratio of the active component A to the solvent is 1:50 to 50:0.

Preferably, in the step S1, the mass ratio of the active component A to the emulsifier is 1:20 to 20:0; and the mass ratio of the active component A to the solvent is 1:20 to 20:1.

Preferably, in the step S1, the mass ratio of the active component A to the emulsifier is 1:5 to 5:1; and the mass ratio of the active component A to the solvent is 1:10 to 5:1.

The mass ratio of the active component A to the active component B is 1:100 to 1:1.

Preferably, the mass ratio of the active component A to the active component B is 1:60 to 1:1.

Further preferably, the mass ratio of the active component A to the active component B is 1:40 to 1:5.

The solid formulation is in the form of wettable powder, soluble powder, soluble granule, emulsifiable powder, emulsifiable granule or water dispersible granule.

In the step S3, when the absorbed mixture solution is mixed with the active component B to prepare the solid formulation, auxiliaries and fillers for preparing the solid formulation can also be added.

A solid formulation of a herbicidal composition prepared by the preparing method of the solid formulation is provided.

The white carbon black of the present invention is a general term for amorphous silicic acid and silicate products in the shape of white powder, mainly refers to precipitated silica, fumed silica and superfine silica gel, and also comprises powdery synthetic aluminum silicate and calcium silicate. The white carbon black is a porous substance whose composition can be represented by SiO₂·nH₂O, wherein nH₂O exists in the form of surface hydroxyl.

The diatomite, the pumice, the attapulgite, the kaolin and the bentonite are various types of minerals that can be industrially applied.

In the implementation process, the carrier is one or a mixture of two or more of the white carbon black, the diatomite, the pumice, the attapulgite, the kaolin and the bentonite and may also be one or a mixture of two or more of different types of carriers.

The solid formulation of the present invention is in the form of the wettable powder, the soluble powder, the soluble granule, the emulsifiable powder, the emulsifiable granule or the water dispersible granule. In the preparing process of various formulations, a compound absorbed by the absorption carrier and a glyphosate compound are included; auxiliaries and fillers for preparing the solid formulation can also be added; the auxiliaries are a dispersing agent, a wetting agent, a defoaming agent, a synergist and warning colorants, and adhesives can also be added to granule products. The dispersing agent comprises one, two or more of polyoxyethylene ether, EO/PO block copolymers, polycarboxylic acid, naphthalenesulfonic acid and lignosulfonate. The wetting agent comprises one, two or more of naphthalenesulfonic acid, polyether and polycarboxylic acid. The defoaming agent comprises one, two or more of silicone, fatty acid and fatty alcohol. The synergist comprises frequently-used pesticide synergists, such as one, two or more of silicone, ether and succinic acid. Glyphosate synergists comprise one, two or more of commercial tallow amine ethoxylate, silicone, glucoside, quaternary ammonium salt and polyether. The fillers comprise organic fillers and inorganic fillers. The organic fillers comprise polymers, starch, modified starch, cellulose, modified fibers and carbohydrate. The inorganic fillers comprise clay, kaolin, gypsum, bentonite, diatomite, talcum powder, argil, magnesium aluminum silicate, activated clay, white carbon black, limestone, light calcium carbonate, ammonium sulfate, potassium sulfate, potassium chloride and ammonium chloride. In the specific implementation process, one, two or more of the above fillers are included. The warning colorants comprise conventional inorganic and organic color substances.

Conventional processing methods and physical indexes of the solid dosage forms of the present invention, such as pesticide wettable powder, the soluble powder (granule), the emulsifiable powder (granule) and the water dispersible granule, can be referred to Modern Pesticide Formulation Processing Technology, Liu Guangwen, Chemical Industry Press.

In the definitions of the compounds of the formula I provided by the present invention, the terms used in the collection are generally defined as follows:
Halogen: fluorine, chlorine, bromine or iodine. Alkyl: linear or branched alkyl, such as methyl, ethyl, propyl, isopropyl, n-butyl or tert-butyl. Haloalkyl: linear or branched alkyl on which hydrogen atoms can be partially or fully replaced by halogen atoms, such as chloromethyl, dichloromethyl, trichloromethyl, fluoromethyl, difluoromethyl and trifluoromethyl.

Part of compounds in the formula I can be illustrated by specific compounds listed in Table 1, but the present invention is not limited to the compounds. In the table, the compound R₁=CH₃, and other groups are shown in Table 1.

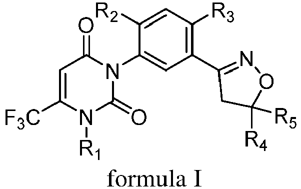

**Table 1**

| No. | R₂ | R₃ | R₄ | R₅ |
|---|---|---|---|---|
| A-1 | F | Cl | CH₃ | CH₃ |
| A-2 | F | Cl | C₂H₅ | CH₃ |
| A-3 | F | Cl | *cyclo*-C₃H₅ | CH₃ |
| A-4 | F | Cl | CO₂H | CH₃ |
| A-5 | F | Cl | CO₂CH₃ | CH₃ |
| A-6 | F | Cl | CO₂C₂H₅ | CH₃ |
| A-7 | F | Cl | CO₂C₃H₇ | CH₃ |
| A-8 | F | Cl | CO₂C₄H₉ | CH₃ |
| A-9 | F | Cl | CO₂(*cyclo*-C₃H₅) | CH₃ |
| A-10 | F | Cl | CO₂(*iso*-C₃H₇) | CH₃ |
| A-11 | F | Cl | CO₂(*tert-*C₄H₉) | CH₃ |
| A-12 | F | Cl | CO₂CH₂C≡CH | CH₃ |
| A-13 | F | Cl | CO₂CH₂CH=CH₂ | CH₃ |
| A-14 | F | Cl | CO₂CH₂C(CH₃)=CH₂ | CH₃ |
| A-15 | F | Cl | CO₂CH₂CH₂OC₂H₅ | CH₃ |
| A-16 | F | Cl | CO₂CH₂CH₂OCH₃ | CH₃ |
| A-17 | F | Cl | CO₂CH₂CH₂OCOCH₃ | CH₃ |
| A-18 | F | Cl | CO₂CH₂Ph | CH₃ |
| A-19 | F | Cl | CO₂CH₂(4-Cl-Ph) | CH₃ |
| A-20 | F | Cl | CO₂CH₂(2,6-2F-Ph) | CH₃ |
| A-21 | F | Cl | CO₂CH₂(2,6-2Cl-Ph) | CH₃ |
| A-22 | F | Cl | CONH₂ | CH₃ |
| A-23 | F | Cl | CONHCH₃ | CH₃ |
| A-24 | F | Cl | CONHC₂H₅ | CH₃ |
| A-25 | F | Cl | CONHC₃H₇ | CH₃ |
| A-26 | F | Cl | CONH(*iso*-C₃H₇) | CH₃ |
| A-27 | F | Cl | CONH(*cyclo*-C₃H₅) | CH₃ |
| A-28 | F | Cl | CONH(*tert*-C₄H₉) | CH₃ |
| A-29 | F | Cl | CON(CH₃)₂ | CH₃ |
| A-30 | F | Cl | CON(C₂H₅)₂ | CH₃ |
| A-31 | F | Cl | CON(C₃H₇)₂ | CH₃ |
| A-32 | F | Cl | CONHCH₂Ph | CH₃ |
| A-33 | F | Cl | 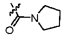 | CH₃ |
| A-34 | F | Cl | 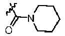 | CH₃ |
| A-35 | F | Cl | 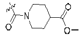 | CH₃ |
| A-36 | F | Cl | 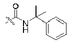 | CH₃ |
| A-37 | F | Cl | 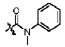 | CH₃ |
| A-38 | F | Cl | 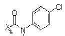 | CH₃ |
| A-39 | F | Cl | 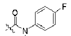 | CH₃ |
| A-40 | F | Cl | 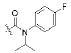 | CH₃ |
| A-41 | F | Cl | CN | CH₃ |
| A-42 | F | Cl | CH₂OCOCH₃ | CH₃ |
| A-43 | F | Cl | CO₂CH₂CF₃ | CH₃ |
| A-44 | F | Cl | CO₂CH₂CH(CH₃)₂ | CH₃ |
| A-45 | F | Cl | 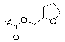 | CH₃ |
| A-46 | F | Cl | CO₂CH₃ | H |
| A-47 | F | Cl | CO₂C₂H₅ | H |
| A-48 | F | Cl | CO₂C₃H₇ | H |
| A-49 | F | Cl | CO₂C₄H₉ | H |
| A-50 | F | Cl | CO₂(*cyclo*-C₃H₅) | H |
| A-51 | F | Cl | CO₂(*iso*-C₃H₇) | H |
| A-52 | F | Cl | CO₂(*tert-*C₄H₉) | H |
| A-53 | F | Cl | CO₂CH₂CH₂OC₂H₅ | H |
| A-54 | F | Cl | CO₂CH₂CH₂OCH₃ | H |
| A-55 | F | Cl | CO₂CH₂CH₂OCOCH₃ | H |
| A-56 | F | Cl | CO₂CH₂Ph | H |
| A-57 | F | Cl | CO₂CH₂(4-Cl-Ph) | H |
| A-58 | F | Cl | CO₂CH₂(2,6-2F-Ph) | H |
| A-59 | F | Cl | CO₂CH₂(2,6-2Cl-Ph) | H |
| A-60 | F | Cl | CONH₂ | H |
| A-61 | F | Cl | CONHCH₃ | H |
| A-62 | F | Cl | CONHC₂H₅ | H |
| A-63 | F | Cl | CONHC₃H₇ | H |
| A-64 | F | Cl | CONH(*iso*-C₃H₇) | H |
| A-65 | F | Cl | CONH(*cyclo*-C₃H₅) | H |
| A-66 | F | Cl | CONH(*tert*-C₄H₉) | H |
| A-67 | F | Cl | CON(CH₃)₂ | H |
| A-68 | F | Cl | CON(C₂H₅)₂ | H |
| A-69 | F | Cl | CON(C₃H₇)₂ | H |
| A-70 | F | Cl | CONHCH₂Ph | H |
| A-71 | F | Cl | 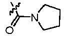 | H |
| A-72 | F | Cl | 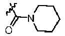 | H |
| A-73 | F | Cl | 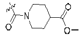 | H |
| A-74 | F | Cl | 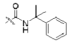 | H |
| A-75 | F | Cl | 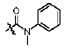 | H |
| A-76 | F | Cl | 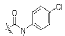 | H |
| A-77 | F | Cl | 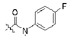 | H |
| A-78 | F | Cl | 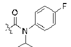 | H |
| A-79 | F | Cl | CN | H |
| A-80 | F | Cl | CH₂OCOCH₃ | H |
| A-81 | H | Cl | CH₃ | CH₃ |
| A-82 | H | Cl | C₂H₅ | CH₃ |
| A-83 | H | Cl | *cyclo*-C₃H₅ | CH₃ |
| A-84 | H | Cl | CO₂H | CH₃ |
| A-85 | H | Cl | CO₂CH₃ | CH₃ |
| A-86 | H | Cl | CO₂C₂H₅ | CH₃ |
| A-87 | H | Cl | CO₂C₃H₇ | CH₃ |
| A-88 | H | Cl | CO₂C₄H₉ | CH₃ |
| A-89 | H | Cl | CO₂(*cyclo*-C₃H₅) | CH₃ |
| A-90 | H | Cl | CO₂(*iso*-C₃H₇) | CH₃ |
| A-91 | H | Cl | CO₂(*tert-*C₄H₉) | CH₃ |
| A-92 | H | Cl | CO₂CH₂C≡CH | CH₃ |
| A-93 | H | Cl | CO₂CH₂CH=CH₂ | CH₃ |
| A-94 | H | Cl | CO₂CH₂C(CH₃)=CH₂ | CH₃ |
| A-95 | H | Cl | CO₂CH₂CH₂OC₂H₅ | CH₃ |
| A-96 | H | Cl | CO₂CH₂CH₂OCH₃ | CH₃ |
| A-97 | H | Cl | CO₂CH₂CH₂OCOCH₃ | CH₃ |
| A-98 | H | Cl | CO₂CH₂Ph | CH₃ |
| A-99 | H | Cl | CO₂CH₂(4-Cl-Ph) | CH₃ |
| A-100 | H | Cl | CO₂CH₂(2,6-2F-Ph) | CH₃ |
| A-101 | H | Cl | CO₂CH₂(2,6-2Cl-Ph) | CH₃ |
| A-102 | H | Cl | CONH₂ | CH₃ |
| A-103 | H | Cl | CONHCH₃ | CH₃ |
| A-104 | H | Cl | CONHC₂H₅ | CH₃ |
| A-105 | H | Cl | CONHC₃H₇ | CH₃ |
| A-106 | H | Cl | CONH(*iso*-C₃H₇) | CH₃ |
| A-107 | H | Cl | CONH(*cyclo*-C₃H₅) | CH₃ |
| A-108 | H | Cl | CONH(*tert*-C₄H₉) | CH₃ |
| A-109 | H | Cl | CON(CH₃)₂ | CH₃ |
| A-110 | H | Cl | CON(C₂H₅)₂ | CH₃ |
| A-111 | H | Cl | CON(C₃H₇)₂ | CH₃ |
| A-112 | H | Cl | CONHCH₂Ph | CH₃ |
| A-113 | H | Cl | 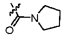 | CH₃ |
| A-114 | H | Cl | 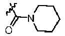 | CH₃ |
| A-115 | H | Cl | 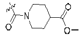 | CH₃ |
| A-116 | H | Cl | 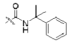 | CH₃ |
| A-117 | H | Cl | 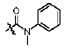 | CH₃ |
| A-118 | H | Cl | 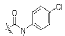 | CH₃ |
| A-119 | H | Cl | 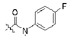 | CH₃ |
| A-120 | H | Cl | 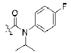 | CH₃ |
| A-121 | H | Cl | CN | CH₃ |
| A-122 | H | Cl | CH₂OCOCH₃ | CH₃ |
| A-123 | H | Cl | CO₂CH₂CF₃ | CH₃ |
| A-124 | H | Cl | CO₂CH₂CH(CH₃)₂ | CH₃ |
| A-125 | H | Cl | 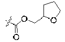 | CH₃ |

The technical solution proposed by the present invention has the following advantages:
1. The absorption carrier is adopted in the present invention to absorb the active component A of the formula I, and is used for preparing the solid formulation product with the glyphosate compound (the active component B), thereby reducing the direct contact between the active component A and the glyphosate compound and effectively reducing the decomposition rate of the active component A in the mixture.
2. The solid formulation of the herbicidal composition prepared by the present invention is favorable for the development of a mixture product of the active component A and the glyphosate compound, solves the problem of high decomposition rate when the active component A and the glyphosate compound are directly mixed in the solid formulation, effectively solves the development problem of the mixture of the solid formulation containing the above two herbicidal activity substances, obtains a mixture product with the decomposition rate comply with relevant registration requirements, and establishes a good foundation for the commercial development of the mixture product.

### Detailed Description

Detailed description of the present invention is further illustrated below in combination with examples. It shall be noted that the detailed description described herein are only used to illustrate and explain the present invention. The active component A comprises the compound shown in the formula I, and the active component B comprises agricultural glyphosate and various forms of salt and ester.

The present invention further illustrates the preparing method of a stable composition of the compound in the formula I and the glyphosate compound. However, the present invention is not limited to this. The described active components are the active components in the herbicidal composition of the present invention, which are compound of the formula I and glyphosate or an applicable salt and ester thereof. The compounds of the formula I adopted in the following examples are the compounds recorded in Table 1. The percents in all formulation proportions are mass percent. The active components are calculated by effective contents.

### Formulation Examples

In the formulation examples, the active components of the composition are: the active component A is the compound shown in the formula I (see Table 1), and the active component B is glyphosate or salt of the glyphosate.

### Example 1

2.0 g (95% of content) of compound A-6, 7.0 g of emulsifier Tween 20 and 5.0 g of solvent N-methylpyrrolidone are stirred evenly at room temperature; the liquid mixture is sprayed onto 50.0 g of pumice powder at room temperature and mixed; after the mixture is even, 108.5 g of glyphosate ammonium salt, 10 g of naphthalene sulfonate dispersant NNO, 2 g of naphthalene sulfonate wetting agent EFW and 2.4 g of diatomite are weighed, with a total weight of 200 g, and crushed to obtain a wettable powder product; part of the product is stored at 54 °C for 14 days; and A-6 content is analyzed.

### Example 2

5.0 g (95% of content) of compound A-6, 3.0 g of emulsifier Span 80, 3.0 g of polyoxyethylene castor oil EL40, 1.0 g of absolute ethanol and 1.0 g of *N*,*N*-dimethylformamide are stirred evenly at 50 °C; the liquid mixture is sprayed onto 175.0 g of attapulgite powder (Hebei Jiashili) at 50 °C and mixed; after the mixture is even, 285.0 g of glyphosate acid, 10.0 g polycarboxylic acid dispersant TERSPERSE 2700 (Huntsman) and 2.0 g of polycarboxylic acid wetting agent Terwet 1004 (Huntsman) are weighed, with a total weight of 333.0 g, and crushed to obtain a wettable powder product; part of the product is taken and stored at 54 °C for 14 days; and A-6 content is analyzed.

### Example 3

2.0 g (95% content) of compound A-6, 3.0 g of emulsifier sodium dioctyl sulfosuccinate and 2.0 g of γ-butyrolactone are stirred evenly at 70 °C; the liquid mixture is sprayed onto 3.5 g of white carbon black 380 (Jiande Gengxin) at 70 °C and mixed; after the mixture is even, 102.0 g of potassium glyphosate, 10.0 g of dispersant Borresperse NA (Akzo Nobel), 1.5 g of wetting agent Petro AA (Akzo Nobel) and 3.0 g of ammonium sulfate are weighed and crushed to obtain a soluble powder product; part of the product is taken and stored at 54 °C for 14 days; and A-6 content is analyzed.

### Example 4

2.0 g (95% content) of compound A-8, 2.0 g of emulsifier iso-tridecanol polyoxyethylene ether (9 ethylene oxides) and 2.0 g of *N*,*N*-dimethyl decylamide are stirred evenly at room temperature; the liquid mixture is sprayed onto 3.5 g of white carbon black TB-2 (Tonghua Shuanglong) at room temperature and mixed; after the mixture is even, 21.7 g of ammonium glyphosate, 5.0 g of dispersing agent D425 (Akzo Nobel), 3.0 g of dispersing agent T36 (Solvay), 1.0 g of wetting agent Berol 790A and 9.8 g of ammonium sulphate are weighed and crushed to obtain a soluble powder product; part of the product is taken and stored at 54 °C for 14 days; and A-8 content is analyzed.

### Example 5

2.0 g (95% content) of compound A-8, 2.0 g of emulsifier 601-P (phosphate of emulsifier 600#), 6.0 g of solvent oil 150# and 3.0 g of *N*-methylpyrrolidone are stirred evenly at 85 °C; the liquid mixture is sprayed onto 16.0 g of white carbon black 380 (Jiande Gengxin) at 60 °C and mixed; after the mixture is even, 102.0 g of ammonium glyphosate, 10 g of Atlox 4913 (Croda), 1.5 g of wetting agent Petro AA, 18.0 g of ADsee C80W (Akzo Nobel) and 5.0 g of water soluble starch are weighed and mixed evenly; after 7.0 g of water is added and mixed evenly, the mixture is extruded and granulated; the sample is dried at 40 °C for 6 h to obtain a soluble granule product; part of the product is taken and stored at 54 °C for 14 days; and A-8 content is analyzed.

### Example 6

2.0 g (95% content) of compound A-6, 2.0 g of emulsifier Ethylan NS-500LQ (Akzo Nobel) and 2.0 g of N,N-dimethyl decylamide are stirred evenly at 40 °C; the liquid mixture is sprayed onto 2.0 g of white carbon black 380 (Jiande Gengxin) at 40 °C and mixed; after the mixture is even, 90.0 g of ammonium glyphosate, 10.0 g of dispersing agent ATLOX 500S (Solvay), 5.0 g of dispersing agent NNO, 1.5 g of wetting agent Petro 790A, 6.0 g of polyvinylpyrrolidone K30, 12.0 g of Terwet 1221 (Huntsman) and 17.5 g of ammonium sulphate are weighed and mixed evenly; after 5.0 g of water is added and mixed evenly, the mixture is extruded and granulated, the sample is dried at 70 °C for 1 h to obtain a soluble granule product; part of the product is taken and stored at 54 °C for 14 days; and A-6 content is analyzed.

### Example 7

2.0 g (95% content) of compound A-10, 0.5 g of emulsifier Termul 5030 (Huntsman) and 2.0 g of *N*,*N*-dimethyl decylamide are stirred evenly at 90 °C; the liquid mixture is sprayed onto 9.0 g of white carbon black 622 (German Evonik) at room temperature and mixed; after the mixture is even, 90.0 g of glyhosate potassium salt, 10.0 g of dispersing agent POWERBLOX D-518 (Dow), 5.0 g of dispersing agent NNO, 1.5 g of wetting agent Petro 790A (Akzo Nobel), 6.0 g of polyvinylpyrrolidone K30, 12.0 g of Terwet 1221 (Huntsman) and 12.0 g of ammonium sulphate are weighed and mixed evenly; after 5.0 g of water is added and mixed evenly, the mixture is granulated; the sample is dried at 50 °C for 4 h to obtain a water dispersible granule product; part of the product is taken and stored at 54 °C for 14 days; and A-10 content is analyzed.

### Example 8

2.0 g (95% content) of compound A-10, 6.0 g of emulsifier PE 6200 (BASF) and 16.0 g of propylene glycol monomethyl ether acetate are stirred evenly at 60 °C; the liquid mixture is sprayed onto 10.0 g of white carbon black 50 (German Evonik) at 40 °C and mixed; after the mixture is even, 38.0 g of glyphosate acid, 10.0 g of dispersing agent T36 (Solvay), 5.0 g of dispersing agent Atlox PN-100 (Croda), 1.5 g of wetting agent Dispersol CBZ (Croda), 3.0 g of polyvinylpyrrolidone K30, 15.0 g of Ethomeen T25 (Akzo Nobel) and 7.5 g of ammonium sulphate are weighed and mixed evenly; after 5.0 g of water is added and mixed evenly, the mixture is granulated; the sample is dried at 60 °C for 2 h to obtain a water dispersible granule product; part of the product is taken and stored at 54 °C for 14 days; and A-10 content is analyzed.

### Example 9

2.0 g (95% content) of compound A-6, 2.0 g of emulsifier AEO-8 and 2.0 g of *N*,*N*-dimethyl decylamide are stirred evenly at 80 °C; the liquid mixture is sprayed onto 7.5 g of white carbon black 622 (German Evonik) at 50 °C and mixed; after the mixture is even, 106.0 g of ammonium glyphosate, 5.0 g of dispersing agent Atplus 1209 (Croda), 5.0 g of dispersing agent Atlox PN-100 (Croda), 5.0 g of dispersing agent NNO, 2.5 g of wetting agent Dispersol CBZ (Croda), 3.0 g of polyvinylpyrrolidone K30 and 12.0 g of Ethomeen T25 (Akzo Nobel) are weighed and mixed evenly; after 5.0 g of water is added and mixed evenly, the mixture is granulated; the sample is dried at 60 °C for 2 h to obtain a water dispersible granule product; part of the product is taken and stored at 54 °C for 14 days; and A-6 content is analyzed.

### Example 10

2.0 g (95% content) of compound A-6, 2.0 g of emulsifier 1601 (BASF) and 10.0 g of amyl acetate are stirred evenly at 60 °C; the liquid mixture is sprayed onto 25 g of white carbon black 50 (German Evonik) at 60 °C and mixed; after the mixture is even, 70.0 g of ammonium glyphosate, 10.0 g of dispersing agent TERSPERSE2700 (Huntsman), 5.0 g of dispersing agent BREAK-THRU DA647 (German Evonik), 5.0 g of dispersing agent NNO, 9.0 g of wetting agent Petro 790A, 3.0 g of polyvinylpyrrolidone K30 and 9.0 g of Ethomeen T25 (Akzo Nobel) are weighed and mixed evenly; after 5.0 g of water is added and mixed evenly, the mixture is granulated; the sample is dried at 50 °C for 4 h to obtain a water dispersible granule product; part of the product is taken and stored at 54 °C for 14 days; and A-6 content is analyzed.

### Control example 1

2.0 g (95% content) of compound A-8, 90.0 g of glyphosate acid, 10.0 g of dispersing agent REAX 88B (Meadwestvaco), 5.0 g of dispersing agent MF, 1.5 g of wetting agent sodium dodecyl sulfate, 15.0 g of kaolin and 15.0 g of starch are weighed and crushed to obtain a wettable powder product; part of the product is taken and stored at 54 °C for 14 days; and A-8 content is analyzed.

### Control example 2

2.0 g (95% content) of compound A-10, 90.0 g of ammonium glyphosate, 10.0 g of dispersing agent D110 (Akzo Nobel), 3.0 g of YUS-WG4 (takemoto), 20.0 g of auxiliary Geronol CF120G (Solvay), 20.0 g of water soluble starch and 5.0 g of ammonium sulphate are weighed and crushed; then 10.0 g of water is added and mixed evenly; the mixture is granulated; the sample is dried at 60 °C for 3 h to obtain a water dispersible granule product; part of the product is taken and stored at 54 °C for 14 days; and A-10 content is analyzed.

### Control example 3

2.0 g (95% content) of compound A-6, 2.0 g of emulsifier 1601 (BASF) and 9.0 g of Ethomeen T25 (Akzo Nobel) are heated, dissolved and stirred evenly; 70.0 g of ammonium glyphosate, 10.0 g of dispersing agent TERSPERSE2700 (Huntsman), 5.0 g of dispersing agent BREAK-THRU DA647 (German Evonik), 5.0 g of dispersing agent NNO, 9.0 g of wetting agent Petro 790A, 3.0 g of polyvinylpyrrolidone K30 and 35 g of filler diatomite are weighed and mixed evenly; after 5.0 g of water is added and mixed evenly, the mixture is granulated; the sample is dried at 50 °C for 4 h to obtain a water dispersible granule product; part of the product is taken and stored at 54 °C for 14 days; and A-6 content is analyzed.

### Sample content analysis

After the above prepared samples are stored at 54 °C for 14 days, the decomposition rates of the active component A in the samples are tested. The calculating method of the decomposition rates is: (Wᵣ-Wₕ)/Wᵣ×100%, wherein Wᵣ is the content of the active component in the samples at normal temperature, and Wₕ is the content of the active component in the samples after heat storage.

The content of the active component A of the product is analyzed by high performance liquid chromatography. Specific results are shown in the table below:

**Table 1 Test Results of Decomposition Rates of Samples**

| Sample Name | Active Compound | Decomposition Rate of Active Compound |
|---|---|---|
| Example 1 | A-6 | 4.5% |
| Example 2 | A-6 | 2.6% |
| Example 3 | A-6 | 2.9% |
| Example 4 | A-8 | 4.2% |
| Example 5 | A-8 | 3.3% |
| Example 6 | A-6 | 3.4% |
| Example 7 | A-10 | 5.7% |
| Example 8 | A-10 | 4.1% |
| Example 9 | A-6 | 2.7% |
| Example 10 | A-6 | 3.9% |
| Control example 1 | A-8 | 56.3% |
| Control example 2 | A-6 | 80.2% |
| Control example 3 | A-6 | 65.7% |

The data results in Table 1 show that the active component A is treated by the method of absorbing by the carrier to prepare the solid dosage form, and the decomposition rate after storage for 14 days at 54 °C is less than 6%, and the decomposition rate of the direct granulation method in the control examples is higher than 50%, indicating that the decomposition rate of the active component A in the solid formulation can be effectively reduced by the method of the present invention.

It should be noted that the applicant finds that the decomposition rate of the active component A in the solid formulation prepared by the same type of compounds represented by the active component A in examples 1-10, including, but not limited to A-4, A-5, A-7, A-9, A-11, and the like according to the solution of the present invention is also obviously reduced.

## Claims

1. A preparing method of a solid formulation of a herbicidal composition, **characterized by** comprising the following steps:
S1: an active component A is dissolved in solvent and emulsifier to obtain a mixture solution;
S2: the mixture solution is absorbed using an absorption carrier;
S3: the mixture of S2 is mixed with an active component B to prepare a solid formulation,
wherein the active component B is selected from glyphosate and an applicable salt or ester thereof, and the active component A is a compound shown in a structural formula such as formula I; 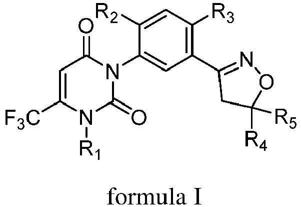 in the formula I:
R₁ is selected from hydrogen, amino or methyl;
R2 and R3 can be identical or different, and are respectively selected from hydrogen, fluorine or chlorine;
R₄ is selected from hydrogen, cyano, C₁-C₄ alkyl, C₁-C₄ haloalkyl, CO₂R₆, CH₂OR₇ or CONR₈R₉;
R₅ is selected from hydrogen, C₁-C₄ alkyl or C₁-C₄ haloalkyl;
R₆ is selected from hydrogen, C₁-C₄ alkyl, C₁-C₄ haloalkyl, C₃-C₄ alkenyl, C₃-C₄ alkynyl, C₁-C₄ alkoxy C₁-C₄ alkyl, C₁-C₄ alkylcarbonyloxy C2-C3 alkyl, 2-tetrahydrofuran methylene or 3-tetrahydrofuran methylene;
R₇ is selected from acetyl;
R₈ is selected from hydrogen or methyl;
R₉ is respectively selected from hydrogen, methyl, ethyl, isopropyl and tert-butyl.

2. The preparing method of the solid formulation of the herbicidal composition according to claim 1, **characterized by** comprising the following steps:
S1: an active component A is dissolved in solvent and emulsifier to obtain a mixture solution;
S2: the mixture solution is absorbed using an absorption carrier;
S3: the mixture of S2 is mixed with an active component B to prepare a solid formulation,
wherein the active component B is selected from glyphosate and an applicable salt or ester thereof, and the active component A is a compound shown in a structural formula such as formula I; 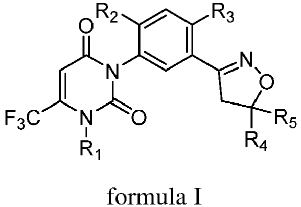 in the formula I:
R₁ is selected from amino or methyl;
R₂ is selected from hydrogen, fluorine or chlorine;
R₃ is selected from hydrogen, fluorine or chlorine;
R₄ is selected from CO₂R₆;
R₅ is selected from hydrogen or methyl;
R₆ is selected from hydrogen, methyl, ethyl, n-propyl, n-butyl, isopropyl, tert-butyl, methoxyethyl, ethoxyethyl, 2-tetrahydrofuran methylene or 3-tetrahydrofuran methylene.

3. The preparing method of the solid formulation of the herbicidal composition according to claim 1, **characterized in that** in the step S2, the absorption carrier is selected from one or a mixture of more of carbon black, diatomite, pumice, attapulgite, kaolin or bentonite.

4. The preparing method of the solid formulation of the herbicidal composition according to any one of claims 1-3, **characterized in that** a mass ratio of the active component A to the absorption carrier is 1:70 to 10:1.

5. The preparing method of the solid formulation of the herbicidal composition according to claim 4, **characterized in that** the mass ratio of the active component A to the absorption carrier is 1:35 to 5:1.

6. The preparing method of the solid formulation of the herbicidal composition according to claim 4 and 5, **characterized in that** in the step S1, at -20°C to 150°C, the active component A is dissolved in the solvent and the emulsifier to obtain the mixture solution; and in the step S2, at -20°C to 100°C, the mixture solution is absorbed by the absorption carrier.

7. The preparing method of the solid formulation of the herbicidal composition according to claim 4 and 5, **characterized in that** in the step S1, at 10°C to 90°C, the active component A is dissolved in the solvent and the emulsifier to obtain the mixture solution; and in the step S2, at 10°C to 70°C, the mixture solution is absorbed by the absorption carrier.

8. The preparing method of the solid formulation of the herbicidal composition according to claim 1, **characterized in that** in the step S1, the emulsifier is one or a mixture of more of an anionic emulsifier, a cationic emulsifier and a nonionic emulsifier; and the solvent is one or a mixture of more of a protic solvent or an aprotic solvent.

9. The preparing method of the solid formulation of the herbicidal composition according to claim 1, **characterized in that** the mass ratio of the active component A to the emulsifier is 1:50 to 50:0; and the mass ratio of the active component A to the solvent is 1:50 to 50:0.

10. The preparing method of the solid formulation of the herbicidal composition according to claim 1, **characterized in that** the mass ratio of the active component A to the active component B is 1:100 to 1:1.

11. The preparing method of the solid formulation of the herbicidal composition according to claim 1, **characterized in that** the solid formulation is in the form of wettable powder, soluble powder, soluble granule, emulsifiable powder, emulsifiable granule or water dispersible granule.

12. The preparing method of the solid formulation of the herbicidal composition according to claim 1, **characterized in that** in the step S3, when the absorbed mixture solution is mixed with the active component B to prepare the solid formulation, auxiliaries and fillers for preparing the solid formulation are added.

13. A solid formulation of a herbicidal composition prepared by the preparing method of the solid formulation according to claim 1.
